# EUROPEAN PATENT APPLICATION

(11) **EP 4 726 606 A1**
(43) Date of publication of application: **15.04.2026**
(21) Application number: 24205810.5
(22) Date of filing: 10.10.2024
(51) Int. Cl.: G06N 3/0475

(54) **PARALLEL PROMPT RE-WRITING AND DATA GENERATION**

(71) Applicant: GDM Holding LLC, Mountain View, CA 94043 (US)
(72) Inventor: SHARIFI, Matthew, London EC4A 3TW (GB)
(74) Representative: Hau, Darren Jun Wai

(57) **Abstract**

This specification describes a method performed by one or more data processing apparatus. The method comprises obtaining a user prompt comprising instructions for generating data and generating, using a data generation system, output data. Generating the output data comprises: processing, using a generative machine learning model, the user prompt to generate a modified prompt concurrently with performing a first data generation phase using the data generation system conditioned on the user prompt to generate intermediate data; and performing a second data generation phase using the data generation system conditioned on the modified prompt to process the intermediate data to generate the output data.

## Description

### BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers to generate an output for a received input. For example, a deep neural network is a deep machine learning model that includes an output layer and one or more hidden layers that each apply a non-linear transformation to a received input to generate an output.

### SUMMARY

According to a first aspect, there is provided a method performed by one or more data processing apparatus. The method comprises obtaining a user prompt comprising instructions for generating data and generating, using a data generation system, output data. Generating the output data comprises processing, using a generative machine learning model, the user prompt to generate a modified prompt concurrently with performing a first data generation phase using the data generation system conditioned on the user prompt to generate intermediate data and performing a second data generation phase using the data generation system conditioned on the modified prompt to process the intermediate data to generate the output data.

In some implementations, the length of the modified prompt is longer than the length of the user prompt.

In some implementations, the first and second data generation phases each comprises a fixed number of data generation steps. For example, the overall data generation process can comprise a generation process repeated over a plurality of timesteps or iterations. A data generation step can correspond to one timestep or iteration. In other examples, a data generation step can be an individual step of a multi-step data generation process.

In some implementations, the first data generation phase includes up to the first quarter of a total number of data generation steps to be carried out to generate the output data. In some implementations, the first data generation phase includes up to the first half of a total number of data generation steps to be carried out to generate the output data. Generally, the first data generation phase conditioned on the user prompt relates to generating the coarse structure of the output data and the second data generation phase conditioned on the modified prompt relates to the generating the finer details of the output data.

In some implementations, the first data generation phase comprises a number of data generation steps and the end of the first data generation phase is determined dynamically based upon the output of a current data generation step. For example, a norm such as the L2-norm of the output of the current data generation step can be determined and compared to a threshold to determine whether to end the first data generation phase. In other implementations, the end of the first data generation phase is determined dynamically based upon a comparison between the output of a current data generation step and the output of a previous data generation step. Generally, if the output is changing more slowly, this can be indicative that the data generation process has moved on from generating the coarse structure of the output data. This could signal that the first data generation phase should end to avoid progressing too far with the data generation process on the basis of the original user prompt.

In some implementations, the generative machine learning model generates a plurality of modified prompts and generating the output data further comprises: for each respective modified prompt, performing a second data generation phase using the data generation system conditioned on the respective modified prompt to process the intermediate data to generate a respective output data item corresponding to the respective modified prompt. In some instances, a plurality of different output data items are to be generated from a user prompt for a user to choose from. A plurality of modified prompts can be generated corresponding to each of the output data items to be generated. In such cases, a single first data generation phase can be performed conditioned on the user prompt to generate intermediate data. A second data generation phase can be performed for each modified prompt to generate a corresponding output data item. Each of these second data generation phases utilizes the same intermediate data generated from the first data generation phase in order to reduce latency whilst maintaining the ability to produce sufficiently different output data items.

In some implementations, processing, using the generative machine learning model, the user prompt to generate a modified prompt concurrently with performing a first data generation phase using the data generation system conditioned on the user prompt to generate intermediate data comprises generating, by the generative machine learning model, an intermediate prompt prior to generating the modified prompt, the generation of the intermediate prompt being carried out concurrently with performing the first data generation phase conditioned on the user prompt; switching conditioning of the first data generation phase to the intermediate prompt after the intermediate prompt has been generated; and continuing performing the first data generation phase concurrently with generating further intermediate prompts or the modified prompt. For example, the output data can correspond to temporal data such as audio or video data. The intermediate prompts can correspond to a part of the temporal data and the data generation process can be performed concurrently whilst the intermediate prompts for each part of the temporal data are being generated. In other examples, the intermediate prompts can provide additional details and the data generation process can be performed concurrently whilst the intermediate prompts are being generated.

In some implementations, performing the second data generation phase using the data generation system conditioned on the modified prompt to process the intermediate data to generate the output data further comprises determining, by the data generation system, that a further modified prompt is required; processing, using the generative machine learning model, the modified prompt to generate the further modified prompt concurrently with performing the second data generation phase; and continuing the second data generation phase using the further modified prompt after the further modified prompt has been generated. For example, one or more machine learning models, such as a critic type machine learning model, can evaluate the modified prompt and/or a current output of the second data generation phase to determine whether a further modified prompt is required.

In some implementations, the data generation system comprises a diffusion neural network. The first data generation phase can comprise a starting sequence of timesteps in a reverse diffusion process and the second data generation phase can comprise a second sequence of timesteps in the reverse diffusion process subsequent to the first sequence of timesteps.

In some implementations, the data generation system comprises one or more autoregressive neural networks. An autoregressive neural network is a neural network that is configured to generate an output in an autoregressive manner. For example, the output can comprise a sequence of tokens and the neural network can generate the output sequence one token at a time at each timestep/data generation step conditioned on the preceding tokens in the output sequence that have already been generated (and conditioned on the user prompt or modified prompt depending on the data generation phase).

The one or more autoregressive neural networks can generate a probability distribution over a vocabulary of output tokens and an output token for the data generation step is selected on the basis of the probability distribution, e.g. through sampling or selecting the token with highest probability.

In some implementations, the vocabulary can include a special token to denote the end of the first data generation phase. In other implementations, the first data generation phase comprises generating a fixed number of output tokens. The output tokens generated by the one or more autoregressive neural networks in the first data generation phase corresponds to the intermediate data.

The tokens generated in the first data generation phase can correspond to high-level/coarse structural details of the output data and the tokens generated in the second data generation phase can correspond to low-level/fine-grained details of the output data.

In some implementations, the vocabulary of output tokens for the first data generation phase and the vocabulary of output tokens for the second data generation phase can be different. Thus, when the first data generation phase ends, the one or more autoregressive neural networks can switch to using the second vocabulary of output tokens in the second data generation phase. In some implementations, the first data generation phase uses a first autoregressive neural network and the second data generation phase uses a second autoregressive neural network different to the first autoregressive neural network.

More generally, the one or more autoregressive neural networks can be configured to generate a value for an element of the output data at each data generation step.

In some implementations, the data generation system comprises a text-to-image generation system and the output data comprises image data. In some implementations, the data generation system comprises a text-to-video generation system and the output data comprises video data. In some implementations, the data generation system comprises a text-to-audio generation system and the output data comprises audio data. In some implementations, the output data comprises text-based data. In some implementations, the data generation system can generate multi-modal output data.

In some implementations, the generative machine learning model is a large language model (LLM) based machine learning models (e.g. foundation models). This can also include multi-modal models that are capable of processing text input together with other modalities such as image, video and/or audio.

According to a second aspect, there is provided a system comprising one or more data processing apparatus and a memory. The memory stores instructions that when executed by the one or more data processing apparatus, causes the one or more data processing apparatus to carry out a method according to the first aspect.

According to a third aspect, there is provided a non-transitory computer-readable storage medium comprising instructions that when executed by one or more data processing apparatus cause the one or more data processing apparatus to carry out a method according to the first aspect.

It will be appreciated that features described in the context of one aspect may be combined with features of one or more other aspects.

Particular embodiments of the subject matter described in this specification can be implemented so as to realize one or more of the following advantages.

The above-described techniques provide for a reduction in latency in data generation systems. Data generation systems can generate data based upon a user prompt comprising instructions for generating the data. The user prompt typically includes instructions in natural language. In some data generation systems, the user prompt is modified using a generative machine learning model to provide a modified user prompt that better matches the distribution of prompts used to train the data generation system. This prompt re-writing however introduces additional latency into the data generation process.

The additional latency can be reduced by using a two-phase data generation process as described herein. The prompt re-writing can be carried out concurrently with the first data generation phase which uses the original user prompt. Once the modified prompt is available, the data generation process can switch to using the modified prompt. Given that the initial stages of a data generation process typically involves generating the coarse structure of the output data, it is possible to use the original user prompt in this stage of the data generation process without impacting too much on the overall quality of the generated output. Thus, by carrying out the prompt re-writing in parallel with a first data generation phase, latency can be reduced whilst maintaining the overall quality of generated output data.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

Figure 1 is a schematic block diagram illustrating an example of a data generation system.
Figure 2 is a schematic timing diagram illustrating a data generation process according to an implementation.
Figure 3 is a schematic timing diagram illustrating a data generation process according to an implementation.
Figure 4 is a schematic timing diagram illustrating a data generation process according to an implementation.
Figure 5 is a flowchart illustrating an example method for generating data according to an implementation.

Like reference numbers and designations in the various drawings indicate like elements.

### DETAILED DESCRIPTION

Generative machine learning models have been used to generate data of many different modalities including text data, image data, video data and audio data. A user prompt can specify instructions for the data to be generated, such as a description of the objects to be included in a generated image. Prompts received from users however are typically short in length and it has been found in some instances that training a data generation system using longer, more detailed synthetic prompts results in an improved data generation system compared to training using only user prompts.

However, given the difference between synthetic prompts and user prompts, there is a potential mismatch in the distributions between the prompts used for training and the prompts seen by the system at inference. This may lead to reduced generation performance. In order to address this performance gap, a generative machine learning model such as a large language model (LLM) can be used to modify a user prompt to better match the distribution of prompts used to train the data generation system. Such prompt re-writing however introduces additional latency into the data generation process. It is therefore desirable to reduce latency whilst maintaining data generation quality and capability.

The techniques described herein provides a two-phase data generation process. In the first data generation phase, an unmodified user prompt can be used at the beginning of the data generation process. This first data generation phase is carried out at the same time as a generative machine learning model, such as an LLM, attempts to re-write the user prompt. Once the prompt re-writing has completed, the data generation process can switch to a second data generation phase whereby the intermediate data generated in the first data generation phase and the modified prompt provided by the generative machine learning model are used to generate the final output data.

The initial part of a data generation process, for example, when generating data using a diffusion neural network, is typically focused on generating the coarse structure of the data such as the outline of objects in an image. It is possible to use the unmodified user prompt in this stage of the data generation process without impacting too much on the overall quality of the generated output. Thus, by concurrently re-writing the user prompt at the same time as carrying out the initial part of the data generation process using the unmodified user prompt the additional latency incurred by prompt re-writing can be reduced. The re-written prompt can then be used for the remaining part of the data generation process to fill out the finer details of the generated data. Therefore, the latency of the data generation process can be reduced whilst maintaining the overall quality of the generated data.

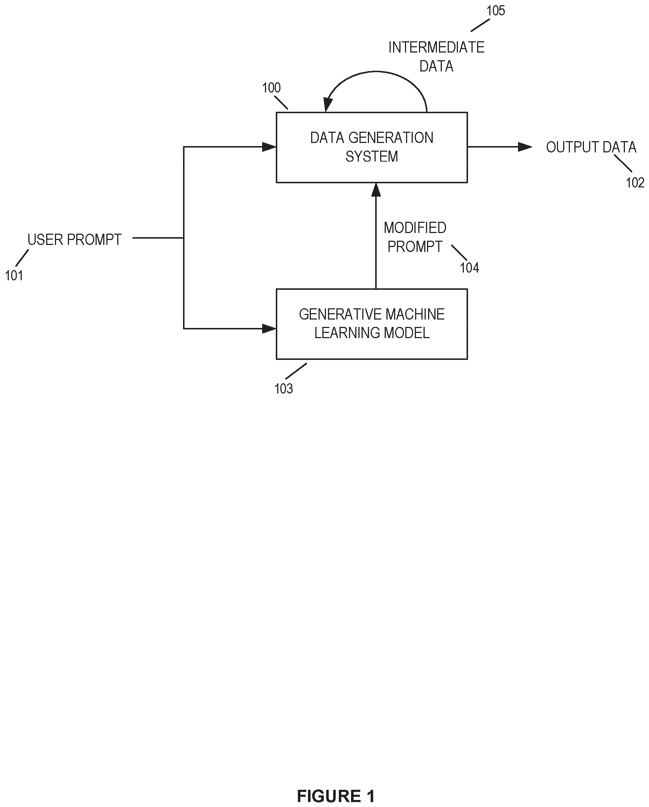

Referring now to Figure 1, a data generation system 100 is shown. The data generation system 100 can be implemented using one or more data processing apparatus in one or more locations. The data processing apparatus can include any appropriate hardware such as a personal computer, a server, a laptop, a mobile device or more specifically any type of processing unit such as a CPU, GPU, TPU or specialized hardware apparatus such as an FPGA or ASIC.

The data generation system 100 is configured to obtain a user prompt 101. The user prompt 101 can be transmitted to the data generation system 100 using any suitable network connection from a user device or the data generation system 100 can comprise a user interface for users to interact with the data generation system 100.

The user prompt 101 comprises instructions for generating data. The data generation system 100 is configured to generate output data 102 to satisfy the user prompt 101. For example, the user prompt 101 can comprise text in natural language instructing the generation of a particular modality (or modalities) of data and describing the data to be generated. In this regard, the data generation system 100 can comprise a text-to-image generation system for generating output data that comprises image data, e.g. intensity values for each of a plurality of pixels in an image. The data generation system 100 can comprise a text-to-video generation system for generating output data that comprises video data, e.g. intensity values for each of a plurality of pixels for each a plurality of video frames. In both cases, the user prompt 101 can specify particular objects that are to be depicted in the image/video data and/or particular actions that occur in the image/video data. In some implementations, the data generation process operates in latent/encoding space. The data generation system 100 can further comprise a decoder configured to convert the latent/encoded representation into an output space such as pixel space or an external decoder can be used.

The data generation system 100 can comprise a text-to-audio generation system for generating output data that comprises audio data. The audio data can comprise speech data and/or music data and/or other sounds. The user prompt 101 can specify the speech content or a particular genre and topic for a song, or the sound effects that are to be present in the generated audio. The generated audio data can comprise a spectrogram representation or raw digital samples of an audio waveform or encoded values for any appropriate audio encoding format. The data generation system 100 can further comprise a decoder configured to convert the encoded representation into an output audio space or an external decoder can be used.

The data generation system 100 can comprise components for generating other types of data such as computer program code. The user prompt 101 can specify in natural language a particular functionality of the computer code to be generated and a particular computer programming language for the code for example. The data generation system 100 can be configured to generate multi-modal output data.

The data generation system 100 can comprise one or more machine learning models trained to carry out a particular type of data generation. For example, the data generation system 100 can comprise one or more diffusion neural networks for generating image, video and/or audio data. Generating data using a diffusion neural network is described in further detail below. In addition, or alternatively, the data generation system 100 can comprise one or more autoregressive neural networks trained to carry out a particular type of data generation.

Also shown in Figure 1 is a generative machine learning model 103. In Figure 1, the generative machine learning model 103 is shown as being separate to the data generation system 100. However, it will be appreciated that in some implementations the generative machine learning model 103 can also be part of the data generation system 100. In any case, the data generation system 100 and the generative machine learning model 103 can be implemented on different data processing apparatus such as on different processing units. The data generation system 100 and the generative machine learning model 103 can therefore form a distributed system.

The generative machine learning model 103 is configured to process the user prompt 101 to generate a modified prompt 104. As discussed above, the generative machine learning model 103 can re-write the user prompt 101 such that the modified prompt 104 better matches the distribution of prompts used to train the data generation system 100. The modified user prompt 104 can include additional details and can be longer than the length of the user prompt 101. For example, a user prompt 101 can specify generating an image of a cat playing with a ball of string. The generative machine learning model 103 can re-write the prompt to include additional details such as the breed of cat, the size of the cat, the colour of the ball string etc. Additional details can also be added such as a location, a time of day, other objects/entities that are to appear in the image, a particular background and any other appropriate details. In another example, a user prompt 101 can specify generating a song with a certain style on a particular topic and the generative machine learning model 103 can generate the lyrics of the song from which audio data can be generated by the data generation system 100.

In some implementations, the prompt re-writing generative machine learning model is based upon a large language model (LLM) type machine learning model or other type of foundation model. In some instances, these types of models can be powerful enough to carry out the necessary prompt re-writing in a zero-shot manner (that is without further training) by prompting the model in an appropriate manner, e.g. by providing appropriate instructions and examples to the model. In other instances, a pre-trained model can be fine-tuned for generating modified prompts as appropriate using standard techniques such as supervised fine-tuning and/or reinforcement learning with human feedback. Further details regarding LLMs are described below.

Referring back to the data generation process, the data generation system 100 is configured to generate the output data 102 using a two-phase data generation process. The data generation system 100 is configured to perform a first data generation phase based upon the obtained user prompt 101 to generate intermediate data 105. The data generation system 100 is configured to carry out the first data generation phase concurrently with the processing carried out by the generative machine learning model 103 to generate the modified prompt 104.

The intermediate data 105 can be a partially complete version of the final output data 102. For example, as discussed above, the first data generation phase can generate a coarse structure of the output data 102 and this can be adequately achieved using the original user prompt 101. In this regard, the first data generation phase can be limited to an initial part of the overall data generation process so that the data generation process does not progress too far using the original user prompt 101. For example, in some implementations, the overall data generation process comprises a fixed number of data generation steps. The first data generation phase can be limited to a starting sequence of the data generation steps. For example, the first data generation phase can be limited to the first quarter of the total number of data generation steps, or the first data generation phase can be limited to the first half of the total number of data generation steps, or be limited to any other appropriate number of data generation steps. The exact number of data generation steps can be dependent on the type of data being generated and the technique used for generating the data. For example, using a diffusion neural network for generating audio/visual data, up to half of the time steps in a reverse diffusion process could be part of the first data generation phase. The overall data generation process can include 128 diffusion steps for example. Likewise, for an autoregressive neural network, the first data generation phase can be limited to the generation of the first N tokens for example.

In other implementations, the end of the first data generation phase can be determined dynamically. For example, it can be desirable to end the first data generation phase when the output of the data generation steps is starting to change more slowly. This can be indicative that the data generation process has moved on from generating the coarse structure to generating the finer details of the data. In some implementations, the data generation system 100 can be configured to determine the end of the first data generation phase based upon the output of the current data generation step. For example, in a diffusion neural network that iteratively de-noises an image/a representation of an image, the diffusion neural network can predict an amount of noise to remove at each time step. A norm of this output, e.g an L2-norm, can be determined and compared to a threshold to determine whether or not to end the first data generation phase. A low magnitude can be indicative of less change to the overall image and that the first data generation phase should be terminated. In other implementations, a comparison between the output of a current data generation step and the output of a previous data generation step can be used to determine when to end the first data generation phase. For example, a cosine distance, Euclidean distance or any other appropriate measure of difference can be used for the comparison.

In further implementations, the data generation system 100 can be trained to automatically determine when to end the first data generation phase or another machine learning model can be used to detect when to end the first data generation phase on the basis of the outputs of the data generation steps. For example, a classifier can be used or a probabilistic state model such as a Hidden Markov Model can be used to determine when to transition away from the first data generation phase. In an autoregressive neural network, the neural network typically generates a probability distribution over a vocabulary of output tokens and an output token for the data generation step is selected on the basis of the probability distribution, e.g. through sampling or selecting the token with highest probability. The vocabulary can include a special token to denote the end of the first data generation phase and the autoregressive neural network can select the token accordingly. The autoregressive neural network can be trained using appropriately formed training sequences and in this way, the autoregressive neural network can automatically determine when to end the first data generation phase.

It will be appreciated however that the data generation process is not critically dependent on a precise determination of how long the first data generation phase should be limited to and an approximation can suffice.

In some implementations, the overall data generation process can comprise a generation process that is repeated over a plurality of timesteps or iterations. In such instances, a data generation step can correspond to one timestep or iteration of the process. In other instances, a data generation step can be an individual step of a multi-step data generation process.

Referring back to Figure 1, the data generation system 100 is configured to obtain the modified prompt 104 from the generative machine learning model 103 after it has been generated. In some instances, the modified prompt 104 is available before the end of the first data generation phase. The data generation system 100 can be configured to terminate the first data generation phase early or the data generation system 100 can be configured to complete the first data generation phase before transitioning to the second data generation phase. In other instances, the first data generation phase can terminate before the modified prompt 104 is available, in which case the data generation process can be suspended until the modified prompt 104 is available.

In the second data generation phase, the data generation system 100 is configured to process the intermediate data 105 generated by the first data generation phase to generate the output data 102. The generation of the output data 102 in the second data generation phase is conditioned on the modified prompt 103. As such, the remainder of the data generation process can be based upon the modified prompt 103. Thus, the first data generation phase can generate intermediate data 105 that comprises a coarse structure for the output data 102 using the original user prompt 101. The second data generation phase can generate the finer-grained details to complete the output data 102.

In some implementations, the data generation system 100 is configured to provide a plurality of different output data items for a user to choose from in response to the user prompt 101. In this regard, the generative machine learning model 103 can be configured to generate a plurality of modified prompts from the user prompt 101. That is, the generative machine learning model 103 can generate a number of different prompt re-writes. Each of these individual prompt re-writes can be used as the basis for generating separate data items in the second data generation phase. In other words, for each respective modified prompt of the plurality of modified prompts, the data generation system 100 can be configured to perform a second data generation phase conditioned on the respective modified prompt to process the intermediate data 105 generated by the first data generation phase to generate a respective output data item corresponding to the respective modified prompt. That is, there exists one first data generation phase using the original user prompt 101 to generate the intermediate data 105 and a second data generation phase for each one of the modified prompts produced by the generative machine learning model 103 with each second data generation phase sharing the same intermediate data 105. In this way, the data generation system 100 does not have to repeat the first data generation phase for each respective modified prompt which reduces the latency of the generation process where multiple output data items are to be generated but also ensuring that the data items generated are sufficiently different to each other. The data generation system 100 can be configured to initiate a second data generation phase once the corresponding modified prompt becomes available. As such, the generative machine learning model 103 can continue to generate the remaining modified prompts at the same time as the second data generation phase is taking place for an already generated modified prompt, thereby further reducing latency. The data generation system 100 can be configured to carry out the second data generation phases for each modified prompt in parallel to provide further latency reduction.

In some implementations, the generative machine learning model 103 can be configured to generate an intermediate prompt prior to generating the modified prompt 104, the generation of the intermediate prompt being carried out concurrently with performing the first data generation phase conditioned on the user prompt. The data generation system 100 can be configured to switch conditioning of the first data generation phase to the intermediate prompt after the intermediate prompt has been generated and to continue performing the first data generation phase concurrently with generating further intermediate prompts or the modified prompt 104 by the generative machine learning model 103.

For example, if a user prompt specifies the generation of a song, the generative machine learning model 103 can be configured to generate the specific lyrics of the song. The lyrics can be provided over a number of intermediate prompts so that the data generation process can begin generating output without having to wait until all of the song lyrics have been generated. The same can apply to any other temporal data such as video and other types of audio. In other cases, the intermediate prompts can be structured such that successive intermediate prompts provide further additional details of the data being generated. For example, a user prompt can specify generating an image of a car, a first intermediate prompt can specify a type of car, a second intermediate prompt can specify the color of the car etc.

In some instances, the data generation system 100 can be configured to combine the generated intermediate prompts and the first data generation phase can be conditioned on the combined intermediate prompts. The data generation system 100 can be configured to combine the intermediate prompts and the modified prompt 104 and the second data generation phase can be conditioned on the combined prompt.

In some implementations, the data generation system 100 is configured to determine that a further modified prompt is required. For example, the data generation system 100 can comprise one or more critic-type machine learning models that are configured to evaluate the modified prompt and/or a current output of the data generation process to determine whether a further modified prompt is required. If it is determined that a further modified prompt is required, the generative machine learning 103 can be configured to process the modified prompt to generate the further modified prompt concurrently with performing the second data generation phase. For example, the output of the critic machine learning model can be used to assist the generative machine learning model 103 in generating the further modified prompt. For example, the output of the critic machine learning model can suggest that further additional details relating to a particular aspect of the output data should be generated. Once the further modified prompt is available, the data generation system 100 can be configured to continue the second data generation phase using the further modified prompt.

In implementations where an autoregressive neural network is used for data generation, the autoregressive neural network can be configured to generate output in the first data generation phase using a first vocabulary of output tokens and to generate output using a second vocabulary of output tokens for the second data generation phase. As such, when the first data generation phase ends the autoregressive neural network can switch to using the second vocabulary of output tokens in the second data generation phase. The first vocabulary of output tokens can correspond to high-level/coarse structural details of the overall output data and the second vocabulary of output tokens can correspond to low-level/fine-grained details of the output data. In some implementations, a different autoregressive neural network is used for each data generation phase.

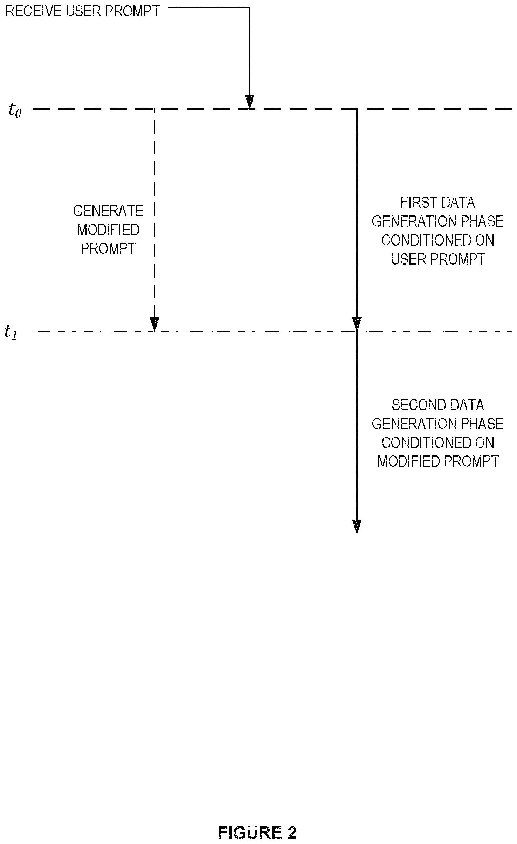

Figure 2 shows a schematic illustration of a data generation process and in particular, the relative timing of various steps of the process. At time t₀, a user prompt is received. A generative machine learning model processes the user prompt to generate a modified prompt as discussed above. At the same time, a data generation system initiates a first data generation phase of a data generation process to generate intermediate data conditioned on the user prompt.

At time t₁, the generative machine learning model completes the processing and makes available the modified prompt to the data generation system. The data generation system transitions to performing a second data generation phase whereby the intermediate data from the first data generation phase is processed to generate output data, the generation conditioned on the modified prompt from the generative machine learning model. Thus, as can be seen from Figure 2, the additional latency caused by the prompt re-writing process is subsumed by carrying out an initial phase of the data generation process using the original user prompt in parallel with the prompt re-writing process.

In some instances, the data generation system can transition to the second data generation phase as soon as the modified prompt becomes available. Thus, the data generation system can transition to the second data generation phase in response to the availability of the modified prompt. As discussed above, in some instances, the first data generation phase is limited so that the data generation phase does not progress too far using only the original user prompt. In these instances, it is possible that the first data generation phase terminates before the modified prompt becomes available and the second data generation phase begins once the modified prompt does become available. In other instances, the first data generation phase can run to its limit even when the modified prompt is available sooner.

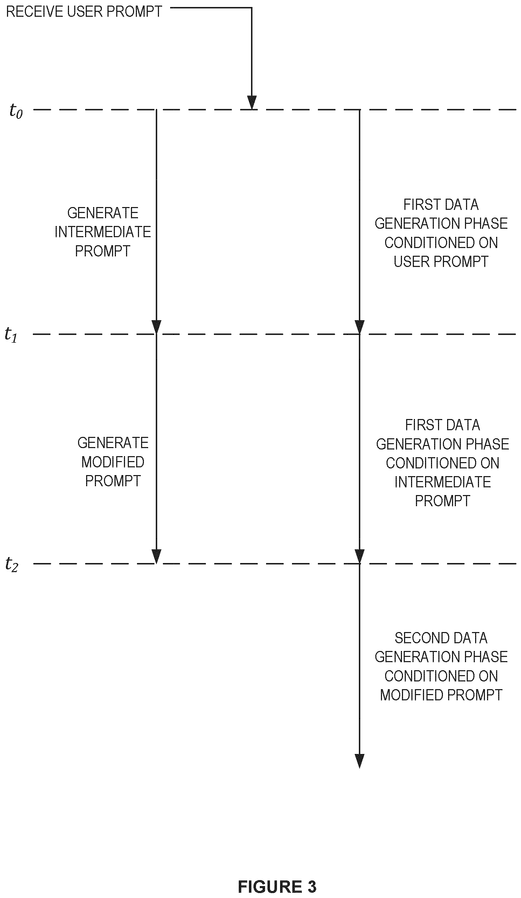

Figure 3 shows a schematic illustration of a data generation process in accordance with another implementation. At time t₀, a user prompt is received. In this implementation, the generative machine learning model processes the user prompt to generate an intermediate prompt. At the same time, the data generation system initiates the first data generation phase based upon the original user prompt as described above.

At time t₁, the generative machine learning model completes the generation of the intermediate prompt and makes available the intermediate prompt to the data generation system. The generative machine learning model then proceeds to generate the modified prompt. The generation of the modified prompt can be conditioned on the generated intermediate prompt and/or the user prompt.

The data generation system switches conditioning of the first data generation phase from the user prompt to the intermediate prompt and continues performing the first data generation phase on this basis at the same time as the generative machine learning model carries out processing to generate the modified prompt.

At time t₂, the generative machine learning model completes the processing to generate the modified prompt. The data generation system then transitions to the second data generation phase to generate the output data conditioned on the modified prompt as discussed above.

Whilst Figure 3 shows only the generation of a single intermediate prompt, it will be appreciated that further intermediate prompts can be generated as necessary in order to generate data to satisfy the original user prompt. In some instances, the generated intermediate prompts can be combined and the first data generation phase can be conditioned on the combined intermediate prompts.

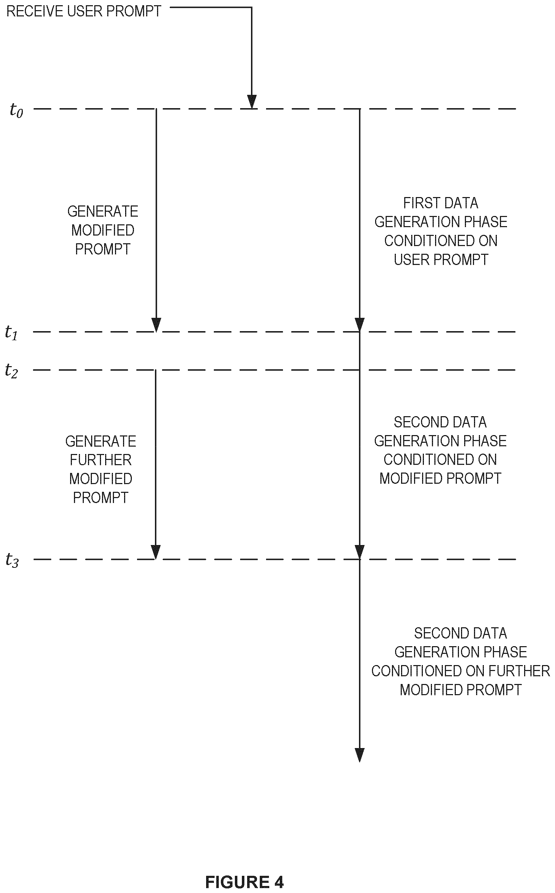

Figure 4 provides a schematic illustration of a data generation process in accordance with a further implementation. This implementation initially follows the same process shown in Figure 2. That is, at time t₀, a user prompt is received. The generative machine learning model processes the user prompt to generate a modified prompt. At the same time, the data generation system initiates the first data generation phase of the data generation process conditioned on the user prompt to generate intermediate data. At time t₁, the generative machine learning model completes the processing and makes available the modified prompt to the data generation system. The data generation system transitions to performing the second data generation phase conditioned on the modified prompt.

At time t₂ however, the data generation system determines that a further modified prompt is required. In response, the generative machine learning model initiates processing to generate a further modified prompt based upon the first modified prompt and/or the original user prompt. In the meantime, the data generation system can continue with the second data generation phase conditioned on the modified prompt in parallel. In some implementations, the data generation system can be configured to limit how far the data generation process continues in this phase conditioned on the modified prompt similar to how the first data generation phase may be limited.

At time t₃, the generative machine learning model completes the processing and makes available the further modified prompt to the data generation system. The data generation system switches conditioning to the further modified prompt and the second data generation phase continues on this basis to generate the output data. Though not shown in Figure 4, it will be appreciated that further modified prompts can be generated in a similar manner if the data generation system makes such a determination. In some instances, the modified prompt and the further modified prompt(s) can be combined and the second data generation phase can be conditioned on the combined prompts.

It will be appreciated that the processes of Figures 2 to 4 can be combined in any appropriate manner. For example, the process of generating intermediate prompts in parallel with the first data generation phase in Figure 3 can be combined with the process of generating further modified prompts for the second data generation phase in Figure 4. The processes of Figures 2 to 4 can be implemented using the data generation system and generative machine learning model machine model of Figure 1 as described above.

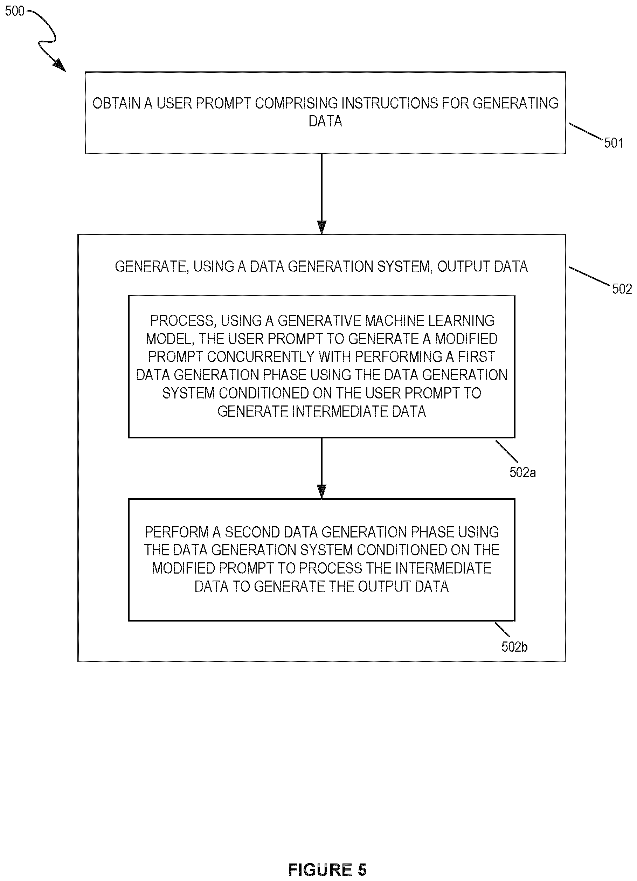

Figure 5 is a flow diagram illustrating an example method 500 for generating data. The processing shown in Figure 5 can be carried out using the data generation system and generative machine learning model of Figure 1.

At step 501, a user prompt comprising instructions for generating data is obtained. As discussed above, the user prompt can comprise text in natural language describing the data that is to be generated. For example, the user prompt can specify the generation of image, video, audio and/or text data.

At step 502, output data is generated using a data generation system. The data generation system can comprise a text-to-image data generation system, a text-to-video data generation system, and/or a text-to-audio data generation system. The data generation system can also comprise a data generation system for generating different types of textual content such as computer program code. The data generation system can also generate multi-modal data. As described above, the data generation system can comprise one or more machine learning models trained to carry out a particular type of data generation. For example, the data generation system can comprise one or more diffusion neural networks which are described in further detail below. In addition, or alternatively, the data generation system can comprise one or more autoregressive neural networks.

Step 502 comprises steps 502a and 502b. At step 502a, a generative machine learning model processes the user prompt to generate a modified prompt concurrently with the data generation system performing a first data generation phase conditioned on the user prompt to generate intermediate data. As described above, user prompts are typically short in length and potentially do not match the distribution of prompts used to train the data generation system. The generative machine learning model can generate a modified prompt that has better alignment with training prompt distribution. The generative machine learning model can modify the user prompt to include additional details and the length of the modified prompt can be longer than the length of the user prompt. The generative machine learning model can be based upon an LLM or other foundation model. LLMs are described in further detail below.

As described above, the first data generation phase can generate a coarse structure of the output data and this can be adequately achieved using the unmodified user prompt. The first data generation phase can be limited to an initial part of the overall data generation process. For example, where the overall data generation process comprises a fixed number of data generation steps, the first data generation phase can include up to the first quarter of a total number of data generation steps to be carried out to generate the output data or the first data generation phase can include up to the first half of a total number of data generation steps to be carried out to generate the output data, or any other suitable proportion. Alternatively, the end of the first data generation phase can be determined dynamically. For example, the end of the first data generation phase can be determined based upon the output of a current data generation step or based upon a comparison between the output of a current data generation step and the output of a previous data generation step. If the outputs are changing slowly, this can be indicative that the overall data generation process has moved on from generating coarse structure to generating finer details of the data and the first data generation phase should end.

In some instances, the first data generation phase ends when the modified prompt becomes available and processing continues to step 502b. In other instances, the first data generation phase continues until completion before continuing to step 502b. In other instances, the modified prompt is not available until after the first data generation phase has ended and processing continues to step 502b when the modified prompt is available.

At step 502b, the data generation system performs a second data generation phase to process the intermediate data conditioned on the modified prompt to generate the output data. The data generation system can complete the remainder of the data generation process conditioned on the modified prompt. The second data generation phase can generate the finer details to complete the output data from coarse structure generated in the first data generation phase.

In some implementations, step 502a can further comprise generating an intermediate prompt prior to generating the modified prompt, the intermediate prompt being generated concurrently with performing the first data generation phase conditioned on the user prompt. After the intermediate prompt has been generated, the conditioning of the first data generation phase can be switched to the intermediate prompt. The first data generation phase can continue concurrently with the generation of the modified prompt or any other further intermediate prompts. For example, as discussed above, the data to be generated can be of a temporal nature and the intermediate prompts can relate to a temporal portion of the output data. In another example, the intermediate prompts can specify further details of the data to be generated.

In some implementations, step 502b can further comprise determining that a further modified prompt is required. The generative machine learning model can process the modified prompt to generate the further modified prompt concurrently with performing the second data generation phase conditioned on the (first) modified prompt. After the further modified prompt has been generated, the second data generation phase can continue conditioned on the further modified prompt. In some instances, the second data generation phase conditioned on the (first) modified prompt can be limited in a similar manner to how the first data generation phase conditioned on the user prompt can be limited. In some instances, one or more critic machine learning models can be used to evaluate the (first) modified prompt and/or a current output of the data generation process to determine whether a further modified prompt is required.

In some implementations, a data generation system can generate multiple different output items for a user to choose from in response to the user prompt. In this regard, the generative machine learning model can generate a plurality of modified prompts, each corresponding to an output data item to be generated. However, rather than naively repeating the process of Figure 5 for each output data item to be generated, it is possible to carry out only a single first data generation phase conditioned on the user prompt to generate intermediate data for use in each subsequent second data generation phase. Thus, for each respective modified prompt, a second data generation phase is performed using the data generation system conditioned on the respective modified prompt to process the intermediate data to generate a respective output data item corresponding to the respective modified prompt. In some instances, the data generation system can initiate the second data generation phase once one of the modified prompts has been generated and the generative machine learning model can continue generating the remaining modified prompts at the same time. In some instances, the second data generation phases for each respective modified prompt can be performed in parallel.

Generation of data using diffusion neural networks (also known as denoising neural networks) will now be described in more detail. Examples of diffusion models include DDIM (Denoising Diffusion Implicit Models) and DDPM (Denoising Diffusion Probabilistic Models). In general, diffusion models generate data by using a noise removal process which is also known as a reverse diffusion process. To perform a reverse diffusion process, the system can utilize a conditioning input, for example, a user prompt or modified user prompt as discussed above.

The system can initialize a representation of a new data item by sampling noise values from a noise distribution. The system can then update the representation of the new data item at each of a plurality of reverse diffusion steps. As part of the updating, at each reverse diffusion step, the system processes a denoising input for the reverse diffusion step that includes the representation of the new data item using the diffusion neural network conditioned on the conditioning input to generate a denoising output that defines an estimate of a noise component of the representation of the new data item.

Optionally, the system can use classifier-free guidance at each reverse diffusion step. When using classifier-free guidance, the system processes another denoising input for the reverse diffusion step that includes the representation of the new data item using the denoising neural network but not conditioned on the conditioning input to generate another denoising output. The system then combines the conditional and unconditional denoising outputs in accordance with a guidance weight for the reverse diffusion step to generate a final denoising output.

At each reverse diffusion step, the system then updates the representation of the new data item using the denoising output. For example, the system can determine an estimate of the data item using the denoising output and then apply an appropriate diffusion sampler, e.g., the DDPM sampler, the DDIM sampler or another appropriate sampler, to the estimate to update the current representation. At the last reverse diffusion step, the system can use the estimate as the updated representation.

After updating the representation of the new data item at each of the plurality of reverse diffusion steps, the system generates the new data item from the representation of the new data item. Each denoising output can define an estimate of a noise component of the corresponding representation of the corresponding data item. The denoising output can define this estimate in any of a variety of ways.

In some implementations, the denoising output is an estimate of the noise component of the current representation, i.e., the noise that needs to be combined with, e.g., added to or subtracted to, a final representation to generate the current representation.

In some other implementations, the denoising output is an estimate of the final representation given the current representation, i.e., an estimate of the representation that would result from removing the noise component of the current representation.

In some other implementations, the denoising output defines a predicted residual between the true noise component of the current representation and an analytic estimate of the noise component, i.e., an estimate that has been computed analytically from the current representation.

In some other implementations, the denoising output is a v-parametrization of the estimate of the noise component.

In any of the above examples, the representations of the data item received as input by the diffusion neural network and updated using the diffusion neural network can either be representations in the output space, e.g, so that the values in the representation are values of image pixels, or an output data item in a latent space, e.g., so that the values in the representation are values in a latent representation of an image in the output space.

When the representations are in a latent space, the system can generate the data item in output space by processing the final representation in the latent space using a decoder neural network, e.g., one that has been pre-trained in an auto-encoder framework with an encoder neural network. During training, the system can use an encoder neural network, e.g., one that has been pre-trained jointly with the decoder in the auto-encoder framework, to encode target data items in the output space to generate target representations for the diffusion neural network in the latent space.

The diffusion neural network can be any appropriate diffusion neural network that is configured to receive an input that includes a current (noisy) representation of a data item and a conditioning input and to generate a denoising output.

In some implementations, the diffusion neural network performs a diffusion process in output space, e.g., pixel space when the data items are images. In this example, when the data items are images, the data items ("representations") operated on and generated by the diffusion neural network have values for each pixel that specify color values, e.g., RGB values or another color encoding scheme.

Examples of such diffusion neural networks include Imagen, further details of which can be found in S. Chitwan, et al. "Photorealistic text-to-image diffusion models with deep language understanding." Advances in neural information processing systems 35 (2022): 36479-36494 which is hereby incorporated by reference in its entirety.

In some other implementations, the diffusion neural network performs a diffusion process in latent space, e.g., in a latent space that is lower-dimensional than the output space. That is, the data items ("representations") operated on by the diffusion neural network are latent representations and the values in the representations are learned, latent values, e.g., rather than color values when the data items are images.

Examples of such diffusion neural networks include Stable Diffusion, further details of which can found in R. Rombach, et al., "High-Resolution Image Synthesis with Latent Diffusion Models," arXiv:2112.10752 (2021), which is hereby incorporated by reference in its entirety.

In these implementations, during training, the diffusion neural network can be associated with an encoder to encode training data items into the latent space and, after training and to generate new output data items, a decoder neural network that receives an input that includes a latent representation of a data item and decodes the latent representation to reconstruct the data item.

In general, diffusion neural networks can be trained using a training dataset of the type of data to be generated, e.g. an image dataset, a video dataset, an audio dataset etc. Image and video data can be captured by an image sensor of a digital camera, LIDAR, infra-red camera or any other camera type. Audio data can be captured from an audio transducer such as a microphone.

The diffusion neural network can be trained over a plurality of training iterations. In each training iteration, one or more training data items can be sampled from the training dataset. A timestep can be sampled, e.g. from a uniform probability distribution, for each of the one or more training data items. Noise can be sampled, e.g. from a Gaussian distribution, to be used in a forward diffusion process that adds noise to the training data item up to the sampled timestep. The diffusion neural network attempts to predict the added noise based upon the noisy image and the timestep. The parameters of the diffusion neural network can be updated using an objective function based upon a comparison between the predicted noise and the sampled noise.

Further details regarding LLMs will now be described. An LLM can be an auto-regressive neural network that generates each token in an output sequence conditioned on the preceding tokens in the output sequence and at least some of the tokens in an input sequence.

For example, the LLM can be configured to process an input sequence of tokens from a vocabulary of tokens to generate an output sequence of tokens from the vocabulary.

More generally, an LLM generative machine learning model can be any appropriate neural network that receives an input sequence made up of tokens selected from a vocabulary and auto-regressively generates an output sequence made up of tokens from the vocabulary. For example, the generative machine learning model can be a Transformer-based neural network or a recurrent neural network-based neural network.

In some situations, the generative machine learning model can be referred to as an auto-regressive neural network when the neural network used to implement the neural network auto-regressively generates an output sequence of tokens. More specifically, the auto-regressively generated output is created by generating each particular token in the output sequence conditioned on a current input sequence that includes any tokens that precede the particular text token in the output sequence, i.e., the tokens that have already been generated for any previous positions in the output sequence that precede the particular position of the particular token, and a context input that provides context for the output sequence.

For example, the current input sequence when generating a token at any given position in the output sequence can include the input sequence and the tokens at any preceding positions that precede the given position in the output sequence. As a particular example, the current input sequence can include the input sequence followed by the tokens at any preceding positions that precede the given position in the output sequence. Optionally, the input and the current output sequence can be separated by one or more predetermined tokens within the current input sequence.

More specifically, to generate a particular token at a particular position within an output sequence, the generative machine learning model can process the current input sequence to generate a score distribution (e.g., a probability distribution) that assigns a respective score, e.g., a respective probability, to each token in the vocabulary of tokens. The generative machine learning model can then select, as the particular token, a token from the vocabulary using the score distribution. For example, the generative machine learning model can greedily select the highest-scoring token or can sample, e.g., using nucleus sampling or another sampling technique, a token from the distribution.

As a particular example, the generative machine learning model can be an auto-regressive Transformer-based neural network that includes (i) a plurality of attention blocks, at least some of which apply a self-attention operation and (ii) an output subnetwork that processes an output of the last attention block to generate the score distribution.

The generative machine learning model can have any of a variety of Transformer-based neural network architectures. Examples of such architectures include those described in J. Hoffmann, S. Borgeaud, A. Mensch, E. Buchatskaya, T. Cai, E. Rutherford, D. d. L. Casas, L. A. Hendricks, J. Welbl, A. Clark, et al. Training compute-optimal large language models, arXiv preprint arXiv:2203.15556, 2022; J.W. Rae, S. Borgeaud, T. Cai, K. Millican, J. Hoffmann, H. F. Song, J. Aslanides, S. Henderson, R. Ring, S. Young, E. Rutherford, T. Hennigan, J. Menick, A. Cassirer, R. Powell, G. van den Driessche, L. A. Hendricks, M. Rauh, P. Huang, A. Glaese, J. Welbl, S. Dathathri, S. Huang, J. Uesato, J. Mellor, I. Higgins, A. Creswell, N. McAleese, A.Wu, E. Elsen, S. M. Jayakumar, E. Buchatskaya, D. Budden, E. Sutherland, K. Simonyan, M. Paganini, L. Sifre, L. Martens, X. L. Li, A. Kuncoro, A. Nematzadeh, E. Gribovskaya, D. Donato, A. Lazaridou, A. Mensch, J. Lespiau, M. Tsimpoukelli, N. Grigorev, D. Fritz, T. Sottiaux, M. Pajarskas, T. Pohlen, Z. Gong, D. Toyama, C. de Masson d'Autume, Y. Li, T. Terzi, V. Mikulik, I. Babuschkin, A. Clark, D. de Las Casas, A. Guy, C. Jones, J. Bradbury, M. Johnson, B. A. Hechtman, L. Weidinger, I. Gabriel, W. S. Isaac, E. Lockhart, S. Osindero, L. Rimell, C. Dyer, O. Vinyals, K. Ayoub, J. Stanway, L. Bennett, D. Hassabis, K. Kavukcuoglu, and G. Irving. Scaling language models: Methods, analysis & insights from training gopher. CoRR, abs/2112.11446, 2021; Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv: 1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like open-domain chatbot. CoRR, abs/2001.09977, 2020; and Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are few-shot learners. arXiv preprint arXiv:2005.14165, 2020. All of which are hereby incorporated by reference in their entirety.

The generative machine learning model can undergo a first phase of pre-training followed by a second phase of fine-tuning. In general, a generative machine learning model such as an LLM can be pre-trained on large amounts of data including data from, but not limited to, webpages, electronic books, software code, electronic news articles, and machine translation data. The generative machine learning model can be pre-trained using unsupervised or self-supervised learning. For example, the generative machine learning model can be pre-trained on a next token prediction task and/or a masked token prediction task. Pre-training on large quantities of diverse data can provide the generative machine learning model with remarkable natural language reasoning capabilities.

Following pre-training, the generative machine learning model can undergo fine-tuning to improve the model's ability to respond to user prompts and queries. Two example types of fine-tuning techniques are supervised fine-tuning (SFT) and reinforcement learning with human feedback (RLHF).

In SFT, a high-quality dataset including examples of input prompts and corresponding responses can be used. This data is typically generated by human annotators. The generative machine learning model can be trained using supervised learning to generate the corresponding responses from the input prompt. SFT requires a much smaller amount of data that used in pre-training.

In RLHF, a reward model can be trained from human preference data regarding different outputs generated from the same input prompt. That is, given an input prompt, different outputs are generated using different models. The models can be a copy of the generative machine learning model with different parameters obtained through checkpointing during pre-training or the models could be entirely unrelated. The input prompt and the different outputs are shown to human assessors and the human assessors are asked to rank the outputs in order of preference with respect to the input prompt. This can be repeated with many different input prompts to generate a dataset of preference data. A reward model can be trained on this preference data to provide a scalar preference value (a "reward" value) for a particular input prompt and generated output pair. The reward model can be based on the generative machine learning model with an additional head for generating the scalar value for example.

The generative machine learning model undergoing training can then be fine-tuned using reinforcement learning based upon the reward values provided by the trained reward model. That is, for a given training prompt, the generative machine learning model generates an output which can be evaluated using the reward model. The parameters of the generative machine learning model can be adjusted using a reinforcement learning update rule based upon the reward value provided by the reward model. In some implementations, a reinforcement learning update rule based upon the Proximal Policy Optimization (PPO) algorithm is used with the generative machine learning model acting as the "policy".

Through such training, it is possible that a generative machine learning model can respond to user queries and instructions in a zero-shot manner, for example, by including appropriate instructions and examples in the prompt provided to the generative machine learning model without the need for further extensive fine-tuning.

It will be appreciated that the above also applies for any autoregressive neural network that is used in the data generation process. An example of an autoregressive neural network for audio generation is AudioLM, further details of which can found in Z. Borsos, et al. "Audiolm: a language modeling approach to audio generation." IEEE/ACM transactions on audio, speech, and language processing 31 (2023): 2523-2533 which is hereby incorporated by reference in its entirety.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

As used herein, the term data processing apparatus includes any suitable computing device or hardware for use in performing the methods described in this specification. The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. In some cases, multitasking and parallel processing may be advantageous.

What is claimed is:

## Claims

1. A method performed by one or more data processing apparatus, the method comprising:
obtaining a user prompt comprising instructions for generating data;
generating, using a data generation system, output data; wherein generating the output data comprises:
processing, using a generative machine learning model, the user prompt to generate a modified prompt concurrently with performing a first data generation phase using the data generation system conditioned on the user prompt to generate intermediate data; and
performing a second data generation phase using the data generation system conditioned on the modified prompt to process the intermediate data to generate the output data.

2. The method of claim 1, wherein the length of the modified prompt is longer than the length of the user prompt.

3. The method of any preceding claim, wherein the first and second data generation phases each comprises a fixed number of data generation steps.

4. The method of claim 3, wherein the first data generation phase includes up to the first quarter of a total number of data generation steps to be carried out to generate the output data; or wherein the first data generation phase includes up to the first half of a total number of data generation steps to be carried out to generate the output data.

5. The method of claim 1 or 2, wherein the first data generation phase comprises a number of data generation steps and wherein the end of the first data generation phase is determined dynamically based upon the output of a current data generation step.

6. The method of claim 5, wherein the end of the first data generation phase is determined dynamically based upon a comparison between the output of a current data generation step and the output of a previous data generation step.

7. The method of any preceding claim, wherein the generative machine learning model generates a plurality of modified prompts; and wherein generating the output data further comprises:
for each respective modified prompt, performing a second data generation phase using the data generation system conditioned on the respective modified prompt to process the intermediate data to generate a respective output data item corresponding to the respective modified prompt.

8. The method of any preceding claim, wherein processing, using the generative machine learning model, the user prompt to generate a modified prompt concurrently with performing a first data generation phase using the data generation system conditioned on the user prompt to generate intermediate data comprises:
generating, by the generative machine learning model, an intermediate prompt prior to generating the modified prompt, the generation of the intermediate prompt being carried out concurrently with performing the first data generation phase conditioned on the user prompt;
switching conditioning of the first data generation phase to the intermediate prompt after the intermediate prompt has been generated; and
continuing performing the first data generation phase concurrently with generating further intermediate prompts or the modified prompt.

9. The method of any preceding claim, wherein performing the second data generation phase using the data generation system conditioned on the modified prompt to process the intermediate data to generate the output data further comprises:
determining, by the data generation system, that a further modified prompt is required;
processing, using the generative machine learning model, the modified prompt to generate the further modified prompt concurrently with performing the second data generation phase; and
continuing the second data generation phase using the further modified prompt after the further modified prompt has been generated.

10. The method of any preceding claim, wherein the data generation system comprises a diffusion neural network; and optionally wherein the first data generation phase comprises a starting sequence of timesteps in a reverse diffusion process and the second data generation phase comprises a second sequence of timesteps in the reverse diffusion process subsequent to the first sequence of timesteps.

11. The method of any preceding claim, wherein the data generation system comprises one or more autoregressive neural networks.

12. The method of any preceding claim, wherein the data generation system comprises a text-to-image generation system and the output data comprises image data; and/or
wherein the data generation system comprises a text-to-video generation system and the output data comprises video data; and/or
wherein the data generation system comprises a text-to-audio generation system and the output data comprises audio data.

13. The method of any preceding claim, wherein the generative machine learning model is a large language model (LLM) based machine learning model.

14. A system comprising:
one or more data processing apparatus; and
a memory storing instructions that when executed by the one or more data processing apparatus causes the one or more data processing apparatus to carry out a method according to any preceding claim.

15. A non-transitory computer-readable storage medium comprising instructions that when executed by one or more data processing apparatus causes the one or more data processing apparatus to carry out a method according to any one of claims 1 to 13.
